# EUROPEAN PATENT APPLICATION

(11) **EP 4 560 805 A1**
(43) Date of publication of application: **28.05.2025**
(21) Application number: 24208572.8
(22) Date of filing: 24.10.2024
(51) Int. Cl.: H01M 50/209, H01M 50/30, H01M 50/358, H01M 50/367, H01M 50/507

(54) **SECONDARY BATTERY PACK**

(30) Priority: 27.11.2023 KR 20230166730
(71) Applicant: Samsung SDI Co., Ltd., Gyeonggi-do 17084 (KR)
(72) Inventor: Lee, Hyeok, Yongin-si, Gyeonggi-do 17084 (KR)
(74) Representative: Gulde & Partner

(57) **Abstract**

A secondary battery module is disclosed. The secondary battery module includes a plurality of battery cells arranged with each other in a first direction, each of the plurality of battery cells including a terminal part on an upper surface, and a vent part to discharge gas, a frame part accommodating the plurality of battery cells, a busbar holder including an opening exposing the terminal part of the plurality of battery cells and a guide duct to guide the discharge of the gas, and a busbar in the opening of the busbar holder and electrically connecting adjacent battery cells of the plurality of battery cells.

## Description

### BACKGROUND

### 1. Field

Embodiments of the present disclosure relate to a secondary battery pack capable of stably discharging gas, for example, gas that was discharged from a vent part of a battery cell, to a side surface of a busbar holder.

### 2. Description of the Related Art

In general, battery cells are used as energy sources for mobile devices, electric vehicles, hybrid vehicles, and/or the like, and may be variously and/or suitably changed and used according to a type or kind of an external device to which the battery cells are applied.

In cases where long-term operation or high-power operation is desired or required, such as in electric vehicles or hybrid vehicles that consume a lot of power, a large-capacity secondary battery module may be formed by electrically connecting multiple battery cells to increase output and capacity. Secondary battery modules may increase output voltage or output current depending on the number of included battery cells.

Also, when a battery cell malfunctions, gas may be discharged from a vent part of the battery cell.

However, the gas generated from the battery cell is often not discharged stably from the busbar holder, resulting in heat propagation damage to a plurality of battery cells caused by the gas.

The above information disclosed in this Background section is only for enhancement of understanding of the background of the disclosure and therefore it may contain information that does not constitute prior art.

### SUMMARY

Aspects of one or more embodiments of the present disclosure are directed toward a secondary battery pack capable of easily discharging gas, for example, gas that was discharged from the vent part of the battery cell, by forming a guide duct through which gas may be discharged on the upper part of a busbar holder.

Additional aspects will be set forth in part in the description which follows and, in part, will be apparent from the description, or may be learned by practice of the presented embodiments of the disclosure.

A secondary battery module according to one or more embodiments includes a plurality of battery cells arranged with each other in a first direction, each of the plurality of battery cells including a terminal part on an upper surface, and a vent part to discharge gas, a frame part accommodating the plurality of battery cells, a busbar holder including an opening exposing the terminal part of the plurality of battery cells and a guide duct to guide discharge of the gas, and a busbar in the opening of the busbar holder and electrically connecting adjacent battery cells among (of) the plurality of battery cells.

In one or more embodiments, the guide duct may be (may be designed) to guide the gas discharged from at least one vent part of the vent parts of the plurality of battery cells toward opposite edges of the busbar holder.

In one or more embodiments, the guide duct may be connected to the at least one vent part and may extend toward an edge of (or among) the opposite edges of the busbar holder.

In one or more embodiments, the guide duct may include a plurality of first guide ducts to guide the discharge of the gas in a first edge direction of the busbar holder, and a plurality of second guide ducts to guide the discharge of the gas in a second edge direction opposite to the first edge direction of the busbar holder.

In one or more embodiments, the plurality of first guides duct may include a plurality of first connectors respectively connected to the vent parts of some of the plurality of battery cells (*e.g*., to allow the introduction of the gas), and a plurality of first ducts to guide the gas from the plurality of first connectors in the first edge direction (e.g., in a direction towards the first edge) of the busbar holder.

In one or more embodiments, at least one of plurality of first connectors may include a first inlet pipe connected to a respective vent part of the vent parts of the plurality of battery cells and may have an opening to allow gas to flow.

In one or more embodiments, the plurality of first ducts may be on an upper part of the busbar holder and at least one of the plurality of first ducts may be at a position between the plurality of battery cells. For example, at least one of the first ducts may cover parts of multiple battery cells, e.g. two adjacent battery cells.

In one or more embodiments, at least one of the first connectors may have a rectangular shape and may cover the respective vent part.

In one or more embodiments, at least one of the first ducts may include a first connection duct connected to a respective first connector of the plurality of first connectors, and a first discharge duct connected to the first connection duct to discharge gas in the first edge direction of the busbar holder.

In one or more embodiments, for the at least one of the first ducts, the first connection duct may be connected between the respective first connector and the first discharge duct and may be inclined at a first angle relative to the first discharge duct (*e.g*., between the first connector and the first discharge duct). The first connection duct may be arranged in parallel with an upper surface of the battery cells.

In one or more embodiments, the first angle may be within a range of about 45° to about 150° relative to the first discharge duct.

In one or more embodiments, for the at least one of the first ducts, the first discharge duct may be in the busbar holder at a position (*e.g*., at an upper part) between adjacent battery cells of the plurality of battery cells.

In one or more embodiments, for the at least one of the first ducts, the first discharge duct may have a trapezoidal (or rectangular) flow path therein to allow the discharge of the gas.

In one or more embodiments, the plurality of second guide ducts may include a plurality of second connectors respectively connected to the vent parts of the plurality of battery cells, the plurality of second connectors alternating with the plurality of first connectors in a length direction of the busbar holder and a plurality of second ducts to guide the gas from the second connectors in the second edge direction of the busbar holder. The length direction of the busbar holder may be a direction in which the battery cells are aligned one by another.

In one or more embodiments, at least one of the plurality of second connectors may include a second inlet pipe connected to a respective vent part of the vent parts of thee plurality of battery cells and may have an opening to allow gas to flow.

In one or more embodiments, the plurality of second ducts may be on the busbar and at least one of the plurality of second ducts may be at a position between the plurality of battery cells.

In one or more embodiments, the second connector may be formed in a rectangular shape covering the vent part in the busbar holder.

In one or more embodiments, the at least one of the second ducts may include a second connection duct connected to a respective second connector of the second connectors, and a second discharge duct connected to the second connection duct to discharge gas in the second edge direction opposite to the first edge of the busbar holder.

In one or more embodiments, for the at least one of the second ducts, the second connection duct may be connected between the second connector and the second discharge duct and may be inclined at a first angle relative to the second discharge duct (between the second connection duct and the second discharge duct). The first ducts and the second ducts may be designed to have the same properties, but alternating orientations.

In one or more embodiments, the first angle may be within a range of 45° to 150°, within a range of 90° to 180°, within a range of 120° to 160°, or within a range of 110° to 150° relative to the second duct.

In one or more embodiments, the busbar holder may be a plastic composite material.

In one or more embodiments, the terminal parts of the plurality of battery cells and the busbar may be joined by welding.

According to one or more embodiments of the present disclosure, a first guide duct and a second guide duct are formed opposite to each other in a staggered (alternative) state on the upper part of the busbar holder, enabling stable discharge of gas in the side surface direction (*e.g.*, toward a side) of the busbar holder.

According to one or more embodiments of the present disclosure, the guide duct is on the upper part of the busbar holder at a position between a plurality of battery cells, preventing or reducing damage to the battery cells due to high-temperature heat during the gas discharge process, thereby improving durability.

### BRIEF DESCRIPTION OF THE DRAWINGS

The accompanying drawings are included to provide a further understanding of the present disclosure, and are incorporated in and constitute a part of this specification. The drawings illustrate example embodiments of the present disclosure and, together with the description, serve to explain principles of present disclosure. In the drawings:
FIG. 1 is a perspective view schematically illustrating a secondary battery pack according to one or more embodiments of the present disclosure.
FIG. 2 is an exploded perspective view of the main portion of the secondary battery pack of FIG. 1 schematically illustrating a separated state of the busbar holder, according to one or more embodiments of the present disclosure.
FIG. 3 is a perspective view schematically illustrating a busbar holder according to one or more embodiments of the present disclosure.
FIG. 4 is a bottom perspective view schematically illustrating the busbar holder of FIG. 3, according to one or more embodiments of the present disclosure.
FIG. 5 is a cross-sectional view schematically illustrating the busbar holder of FIG. 3, according to one or more embodiments of the present disclosure.
FIG. 6 is a top plan view schematically illustrating the main portion of the discharge duct of the busbar holder of FIG. 3 with an inclined connection to the connection duct, according to one or more embodiments of the present disclosure.
FIG. 7 is a perspective view schematically illustrating the main portion of the busbar holder in which the discharge duct is formed, according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, duplicative descriptions thereof may not be provided. In the drawings, the relative sizes of elements, layers, and regions may be exaggerated for clarity.

It will be understood that, although the terms "first," "second," "third," *etc.*, may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from scope of the present disclosure.

Spatially relative terms, such as "on," "lower," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the drawings. For example, if the device in the figures is turned over, elements described as "below" or "under" other elements or features would then be oriented "above" the other elements or features. Thus, the example terms "below" and "under" can encompass both an orientation of above and below. The device may be otherwise oriented (*e.g*., rotated 90 degrees or at other orientations) and the spatially relative descriptors used herein should be interpreted accordingly.

It will be understood that when an element, such as an area, layer, film, region or portion, is referred to as being "on," or "connected to" another element, it can be directly on, or connected to the other element, or one or more intervening elements may be present. In addition, it will also be understood that when an element is referred to as being "between" two elements, it can be the only element between the two elements, or one or more intervening elements may also be present.

As used herein, the singular forms "a," "an" and "the" are intended to include the plural forms as well, unless the context clearly indicates otherwise. It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof.

As used herein, the term "and/or" includes any and all combinations of one or more of the associated listed items.

As used herein, the terms "use," "using," and "used" may be considered synonymous with the terms "utilize," "utilizing," and "utilized," respectively.

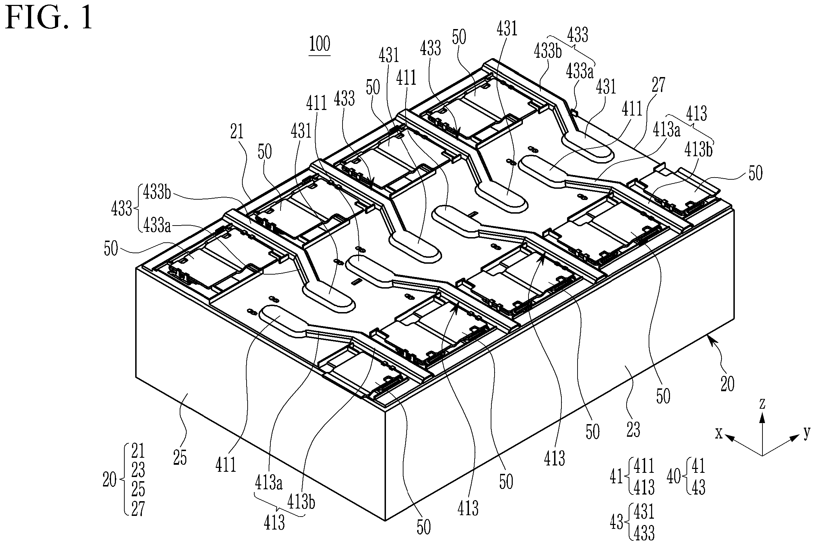

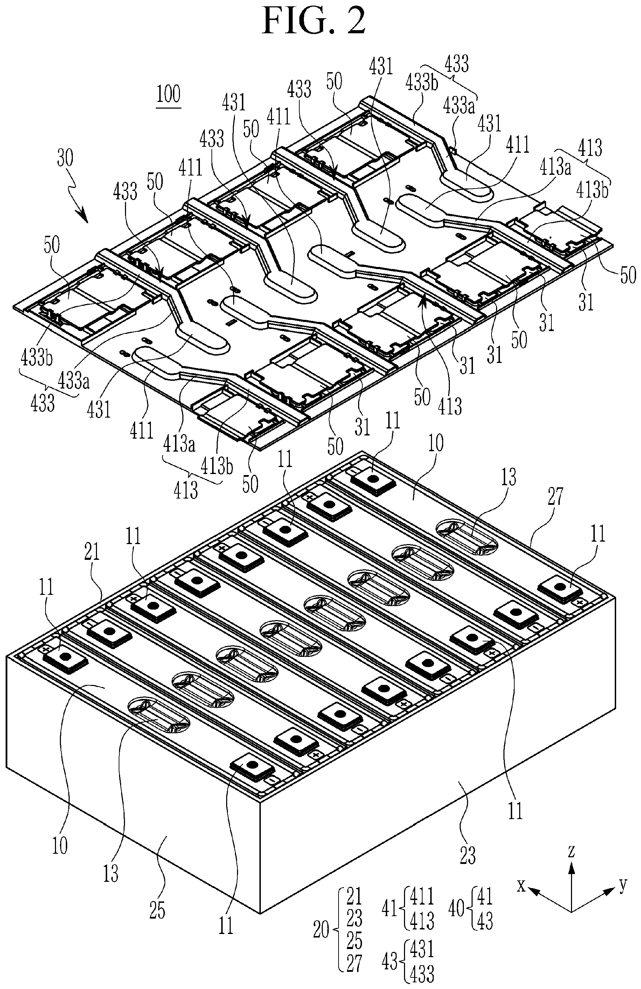

FIG. 1 is a perspective view schematically illustrating a secondary battery pack according to one or more embodiments of the present disclosure, and FIG. 2 is an exploded perspective view of the main part of the secondary battery pack of FIG. 1 schematically illustrating a separated state of the busbar holder, according to one or more embodiments of the present disclosure.

As shown in FIGS. 1 and 2, a secondary battery pack 100 according to one or more embodiments of the present disclosure includes: a plurality of battery cells 10 arranged with each other in (along) a first direction (e.g., an y-axis direction), the plurality of battery cells 10 each having terminal parts 11, and the plurality of battery cells 10 each having a vent part 13 through which gas is discharged; a frame part 20 accommodating the battery cells 10; a busbar holder 30 having an opening 31 (or a plural of openings 31) through which the terminal parts 11 of the plurality of battery cells 10 are exposed, and including a guide duct 40 for guiding the discharge of gas; and a busbar 50 arranged in the opening (or in the openings) 31 of the busbar holder 30 and electrically connecting adjacent battery cells 10 of the plurality of battery cells 10.

The frame part 20 may include a first side frame 21 supporting one side surface of the plurality of battery cells 10, a second side frame 23 supporting the other side of the plurality of battery cells 10, a first end frame 25 having two ends of which one end is connected to an end of the first side frame 21 and the other end is connected to an end of the second side frame 23, and a second end frame 27 also having two ends of which one end is connected to an end of the first side frame 21 and the other end is connected to an end of the second side frame 23.

The first side frame 21 may be installed to support one side of the plurality of battery cells 10.

The second side frame 23 may be installed to support the other side of the plurality of battery cells 10.

The first end frame 25 may be installed to connect one end of each of the first side frame 21 and the second side frame 23. For example, one end of the first end frame 25 may be connected to one end of the first side frame 21 by a fastening member, and the other end may be connected to one end of the second side frame 23 by a fastening member.

The second end frame 27 may be installed to connect the other ends of the first side frame 21 and the second side frame 23. For example, one end of the second end frame 27 may be connected to the other end of the first side frame 21 (*e.g*., the end of the first side frame 21 not connected to the first end frame 25) by a fastening member, and the other end of the second end frame 27 may be connected to the other end of the second side frame 23 (*e.g*., the end of the second side frame 23 not connected to the first end frame 25) by a fastening member.

A plurality of battery cells 10 may be accommodated inside the frame part 20.

The plurality of battery cells 10 may be arranged in the first direction (e.g., an y-axis direction) inside the frame part 20, and each battery cell 10 may have the terminal parts 11 on the upper surface, and the vent part 13 (*e.g*., also on an upper surface) through which gas is discharged.

The busbar holder 30 may be arranged on the upper part of the plurality of battery cells 10.

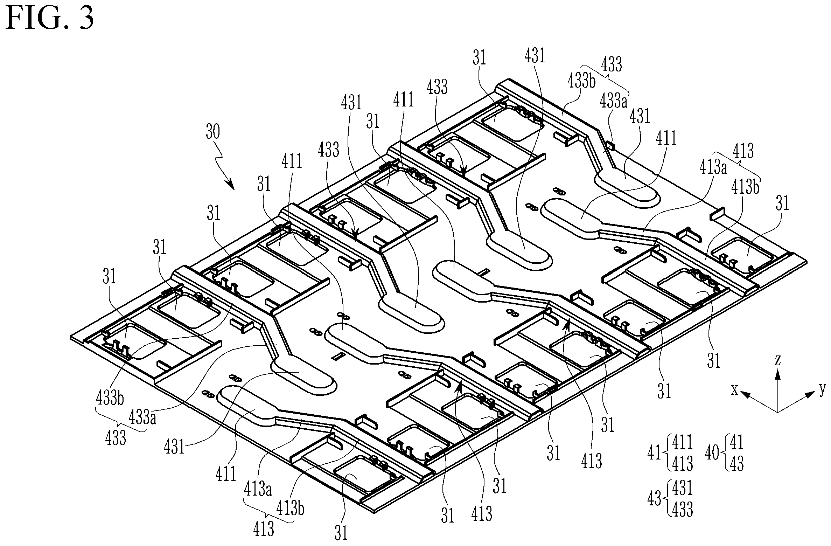

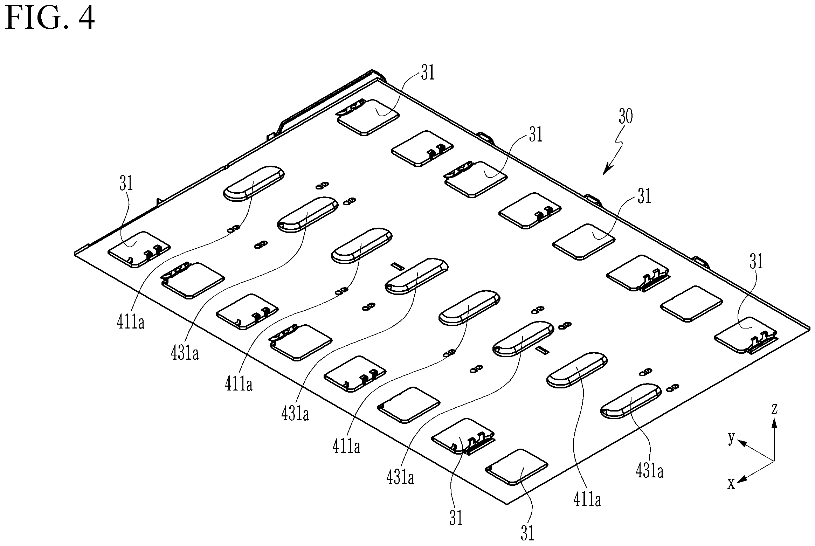

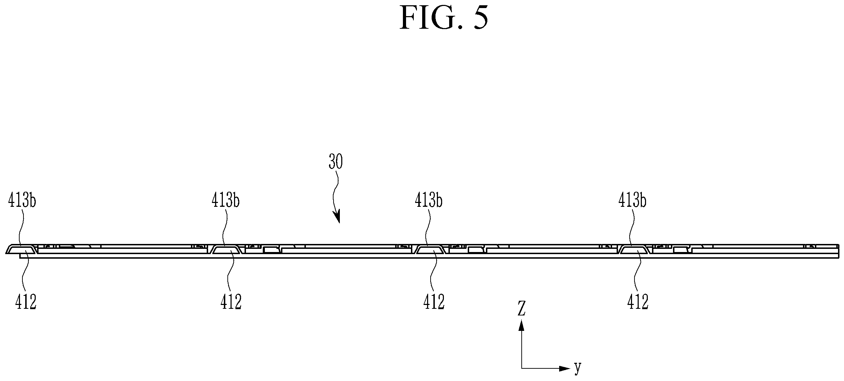

FIG. 3 is a perspective view schematically illustrating a busbar holder according to one or more embodiments of the present disclosure, FIG. 4 is a bottom perspective view schematically illustrating the busbar holder of FIG. 3, according to one or more embodiments of the present disclosure and FIG. 5 is a cross-sectional view schematically illustrating the busbar holder of FIG. 3, according to one or more embodiments of the present disclosure.

As shown in FIGS. 3 to 5, the busbar holder 30 may be formed with the opening 31 through which the terminal parts 11 of the plurality of battery cells 10 are exposed. The terminal part 11 may be welded to the busbar 50 in a state exposed at the opening 31. The busbar holder 30 may be formed of a plastic composite material.

The guide duct 40 may be formed in the busbar holder 30 to guide the discharge of gas discharged from the battery cell 10 in a direction normal (e.g., perpendicular) to the first direction (y-axis direction).

The guide duct 40 may guide the gas discharged from each vent part 13 of the plurality of battery cells 10 to be discharged in the lateral direction of the busbar holder 30.

For example, the guide duct 40 may include a plurality of first guide ducts 41 formed in a first edge direction (*e.g*., in a direction toward the first edge) of the busbar holder 30, and a plurality of second guide ducts 43 formed in a second edge direction (e.g., in a direction toward the second edge) opposite the first edge direction of the busbar holder 30.

The first guide duct 41 and the second guide duct 43 may be formed in a plurality in the first edge direction and the second edge direction, respectively, normal (*e.g*., perpendicular) to the first direction, which is the length direction of the busbar holder 30, to facilitate the discharge of gas in the first and second edge directions of the busbar holder 30.

The first guide duct 41 may include a plurality of first connectors 411 on one side connected to the vent part 13 of any of the plurality of battery cells 10 through which gas may flow in, and a plurality of first ducts 413 guiding the gas that may flow in through the first connector 411 toward the first edge of the busbar holder 30. The vent part 13 may be arranged in a central area of the battery cell 10 with respect to a length direction and/or with respect to a width direction of the battery cell 10.

The first connector 411 forms a part of the first guide duct 41 and may be formed to be connected (*e.g*., may be connected) to the vent part 13, which is formed in the battery cell 10. Accordingly, the first connector 411 may be formed so that the gas discharged from the battery cell 10 flows into the first duct 413.

The first connector 411 may be formed with a first inlet pipe 411a, which is open (*e.g*., has an opening) to allow the gas discharged from the vent part 13 to flow in. The first connector 411 may cover the vent part 13. The first connector may have a similar or substantially the same shape as the vent part 13.

The first connector 411 is formed in the busbar holder 30 in a rectangular shape covering the vent part 13, and may be stably connected to the rectangular vent part 13. The first connector 411 may be changed to an appropriate or suitable shape in response to a change in the shape of the vent part 13.

The first connector 411 may be connected to the vent part 13 formed in some or all of the plurality of battery cells 10.

In one or more embodiments, the first connector 411 may be connected to the vent part 13 of one of a pair of adjacent battery cells 10 among the plurality of battery cells 10 arranged in the first direction inside the frame part 20.

In one or more embodiments, a second connector 431, which will be described in more detail later, may be connected to the vent part 13 of the other battery cell 10 of the pair of adjacent battery cells 10. For example, the first connector 411 and the second connector 431 may be alternately connected to the vent parts 13 of the plurality of battery cells 10, respectively.

On the side of the first connector 411, the first duct 413 may be connected to discharge gas from the vent part 13 of the battery cell 10.

The first duct 413 may be connected to the first connector 411 on one side and extended in a long length in (or, along a length of) the first edge direction of the busbar holder 30 on the other side (*e.g*. the first duct 413 may extend from one end that is connected to the first connector 411 to the other end that is located at or near the first edge of the busbar 30), so that gas may be discharged to the outside of the busbar holder 30.

In one or more embodiments, the first duct 413 may include a first connection duct 413a connected to the first connector 411, and a first discharge duct 413b connected to the first connection duct 413a to discharge gas in the first edge direction of the busbar holder 30.

The first connection duct 413a is a part connecting the first connector 411 and the first discharge duct 413b, and may be obliquely connected between the first connector 411 and the first discharge duct 413b.

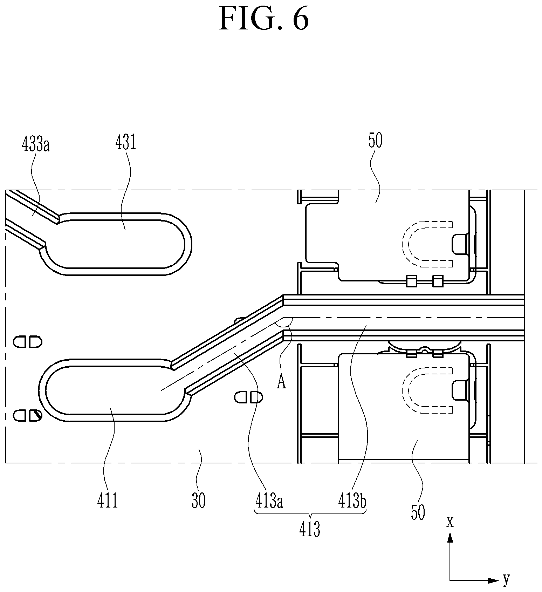

FIG. 6 is a top plan view schematically illustrating the main portion of the discharge duct of the busbar holder of FIG. 3 with an oblique (*e.g*., inclined) connection to the connection duct, according to one or more embodiments of the present disclosure.

As shown in FIG. 6, the first connection duct 413a may be obliquely connected to the first connector 411 and the first discharge duct 413b at a first angle A having a range of about 45° to about 150° relative to the first discharge duct 413b, in one or more embodiments.

The first connection duct 413a is obliquely connected between the first connector 411 and the first discharge duct 413b as described above to ensure that the first discharge duct 413b is arranged at a position between a pair of adjacent battery cells 10 relative to a position where the vent part 13 of the battery cell 10 is formed. The first discharge 413b duct may be arranged such that it covers parts of two adjacent battery cells 10. In other words, the first discharge duct 413b may be arranged on top of a contact area of two adjacent battery cells 10.

Therefore, the gas discharged from the vent part 13 of the battery cell 10 does not move at (on) the upper surface of the battery cells 10, but moves and discharges along the first discharge duct 413b at a position between the battery cells 10, and thus it is possible to prevent or reduce damage to the battery cell 10 caused by high-temperature gas.

Because one side of the first discharge duct 413b is connected to the first connection duct 413a so that gas flows to the first side, and the other side extends in the first edge direction of the busbar holder 30, the gas may be discharged in the first edge direction of the busbar holder 30.

The first discharge duct 413b is formed to protrude toward the busbar holder 30 at a position between the plurality of battery cells 10, and may be formed to facilitate the discharge of the battery cells to the outside without causing damage to the battery cells by gas flowing in through the first connection duct 413a.

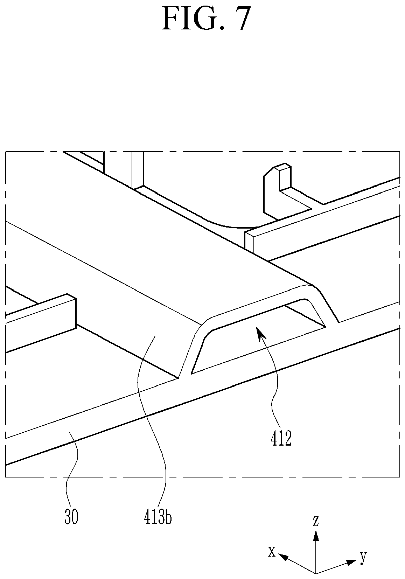

FIG. 7 is a perspective view schematically illustrating the main portion of the busbar holder in which the discharge duct is formed, according to one or more embodiments of the present disclosure.

As shown in FIG. 7, the first discharge duct 413b may have a trapezoidal cross-sectional gas flow path 412 formed therein and may protrude from the busbar holder 30. Alternatively, the first discharge duct 413b may have a rectangular cross-sectional gas flow path 412.

In one or more embodiments, a plurality of second guide ducts 43 may be formed in the busbar holder 30 in a direction normal (*e.g*., perpendicular) to the first direction, and may extend in the second edge direction opposite to the first edge direction of the busbar holder 30 and may be formed to protrude toward the upper part of the busbar holder 30.

Referring again to FIGS. 3 and 4, the second guide duct 43 may include a plurality of second connectors 431 connected to the vent part 13 of the battery cell 10 between the plurality of first connectors 411 through which gas may flow in, and a plurality of second ducts 433 guiding the gas that may flow in through the second connector 431 to be discharged in the second edge direction of the busbar holder 30.

The second connector 431 forms a part of the second guide duct 43, and may be connected to the vent part 13 of the battery cell 10 at a position between the plurality of first connectors 411.

In one or more embodiments, the second connector 431 may be connected to one of a pair of adjacent battery cells 10 among the plurality of battery cells 10 arranged in the first direction inside the frame part 20.

For example, the second connector 431 is connected to the vent part 13 at a position between the plurality of first connectors 411, and the first connector 411 and the second connector 431 may be connected alternately to the plurality of vent parts 13. Accordingly, the plurality of first guide ducts 41 and the plurality of second guide ducts 43 may be formed in the busbar holder 30 in a staggered (or alternating) manner. The plurality of the first guide ducts 41 and the plurality of the second guide ducts 43 may be constructed similarly and may only differ in their alignment.

The second connector 431 may be formed to allow gas discharged from the battery cell 10 to flow into the second duct 433.

The second connector 431 may be formed with a second inlet pipe 431a that is open (*e.g*., has an opening) to allow gas discharged from the vent part 13 to flow in.

The second connector 431 is formed in the busbar holder 30 in a rectangular shape covering the vent part 13, and may be stably connected to the rectangular vent part 13. The second connector 431 may also be changed to an appropriate or suitable shape corresponding to the shape of the vent part 13.

The second duct 433 is connected to the side surface of the second connector 431, so that the gas discharged from the vent part 13 of the battery cell 10 may be discharged.

The second duct 433 may be connected to the second connector 431 on one side and extended in a long length in the second edge direction (or along the second edge direction) of the busbar holder 30 on the other side (*e.g*. the second duct 433 may extend from one end that is connected to the second connector 431 to the other end that is located at or near the second edge of the busbar 30), so that the gas discharged from the vent part 13 may be guided and discharged to the outside of the busbar holder 30.

In one or more embodiments, the second duct 433 may include the first connection duct 413a connected to the second connector 431, and a second discharge duct 433b connected to the second connection duct 433a to discharge gas in the second edge direction of the busbar holder 30.

The second connection duct 433a is a part connecting the second connector 431 and the second discharge duct 433b, and may be obliquely connected between the second connector 431 and the second discharge duct 433b.

The second connection duct 433a may be obliquely connected to the second connector 431 in the first angular range of about 45° to about 150° relative to the second duct 433, in one or more embodiments.

The oblique connection of the second connection duct 433a between the second connector 431 and the second discharge duct 433b is intended to ensure that the second discharge duct 433b is arranged at a position between the pair of adjacent battery cells 10 relative to a position where the vent part 13 of the battery cell 10 is formed. The second discharge 433b duct may be arranged such that it covers parts of two adjacent battery cells 10. In other words, the second discharge duct 433b may be arranged on top of a contact area of two adjacent battery cells 10.

Therefore, the gas discharged from the vent part 13 of the battery cell 10 does not move at (on) the upper surface of the battery cell 10, but moves and discharges along the second discharge duct 413b at a position between the battery cell 10, and thus it is possible to prevent or reduce damage to the battery cell 10 caused by high-temperature gas.

One side of the second discharge duct 433b is connected to the second connection duct 433a so that gas flows to the second side, and the other side extends in the second edge direction of the busbar holder 30, and may be formed to allow gas to be discharged in the second edge direction.

As described above, the second discharge duct 433b is formed to protrude toward the busbar holder 30 at a position between the plurality of battery cells 10, and may be formed to facilitate the discharge of the battery cells to the outside without causing damage to the battery cells by gas flowing in through the second connection duct 413a.

The second discharge duct 433b may have the trapezoidal cross-sectional gas flow path 412 formed therein and may protrude from the busbar holder 30.

As described above, the first guide duct 41 and the second guide duct 43 may extend in the first edge direction and the second edge direction, respectively, at positions staggered from each other (*e.g*., alternating with each other) in the busbar holder 30.

Therefore, the gas discharged from the vent part 13 of the plurality of battery cells 10 may be discharged in the lateral direction of the busbar holder 30 by the first guide duct 41 and the second guide duct 43.

In one or more embodiments, the first and/or second guide ducts 41 and 43 are formed on the busbar holder 30 at a position between the plurality of battery cells 10, preventing or reducing damage to the battery cell due to high-temperature heat during the gas discharge process, thereby improving durability.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (*i.e*., the limitations of the measurement system). For example, "substantially" may mean within one or more standard deviations, or within ± 30%, 20%, 10%, 5% of the stated value.

Further, the use of "may" when describing embodiments of the present disclosure refers to "one or more embodiments of the present disclosure."

The portable device, vehicle, and/or the battery, *e.g*., a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the scope of the present disclosure as defined in the appended claims.

### Reference Numerals

10: Battery cell
11: Terminal part
13: Vent part
20: Frame part
21: First side frame
23: Second side frame
25: First end frame
27: Second end frame
30: Busbar holder
40: Guide duct
41: First guide duct
411: First connector
411 a: First inlet pipe
413: First duct
413a: First connection duct
413b: First discharge duct
43: Second guide duct
431: Second connector
431a: Second inlet pipe
433: Second duct
433a: Second connection duct
433b: Second discharge duct
50: Busbar

## Claims

1. A secondary battery module, comprising:
a plurality of battery cells (10) arranged with each other in a first direction, each of the plurality of battery cells (10) comprising
a terminal part (11) on an upper surface, and
a vent part (13) to discharge gas;
a frame part (20) accommodating the plurality of battery cells (10);
a busbar holder (30) comprising
an opening (31) exposing the terminal part (11) of the plurality of battery cells (10), and
a guide duct (40) to guide discharge of the gas; and
a busbar (50) in the opening (31) of the busbar holder (30) and electrically connecting adjacent battery cells (10) of the plurality of battery cells (10).

2. The secondary battery module as claimed in claim 1, wherein the guide duct (40) is designed to guide the gas discharged from at least one vent part (13) of the vent parts (13) of the plurality of battery cells (10) toward opposite edges of the busbar holder (30).

3. The secondary battery module as claimed in claim 1 or claim 2, wherein the guide duct (40) is connected to the at least one vent part (13) and extends toward an edge among opposite edges of the busbar holder (30).

4. The secondary battery module as claimed in one of claims 1 to 3, wherein the guide duct (40) comprises:
a plurality of first guide ducts (41) to guide the discharge of the gas in a first edge direction of the busbar holder (30); and
a plurality of second guide ducts (43) to guide the discharge of the gas in a second edge direction opposite to the first edge direction of the busbar holder (30), and/or.

5. The secondary battery module as claimed in claim 4, wherein the plurality of first guide ducts (41) comprises:
a plurality of first connectors (411) respectively connected to the vent parts (13) of some of the plurality of battery cells (10); and
a plurality of first ducts (413) to guide the gas from the plurality of first connectors (411) in the first edge direction of the busbar holder (30)
and/or wherein the plurality of second guide ducts (43) comprises:
a plurality of second connectors (431) respectively connected to the vent parts (13) of the plurality of battery cells (10), the plurality of second connectors (431) alternating with the plurality of first connectors (411) in a length direction of the busbar holder (30); and
a plurality of second ducts (433) to guide the gas from the second connectors (431) in the second edge direction of the busbar holder (30).

6. The secondary battery module as claimed in claim 5, wherein at least one of plurality of first connectors (411) comprises a first inlet pipe (411a) connected to a respective vent part (13) of the vent parts (13) of the plurality of battery cells (10) and having an opening (31) to allow gas to flow
and/or wherein at least one of the plurality of second connectors (431) comprises a second inlet pipe (431a) connected to a respective vent part (13) of the vent parts (13) of the plurality of battery cells (10) and having an opening (31) to allow gas to flow.

7. The secondary battery module as claimed in claim 5 or in claim 6, wherein the plurality of first ducts (413) is on an upper part of the busbar holder (30) and at least one of the plurality of first ducts (413) is at a position between the plurality of battery cells (10),
and/or wherein the plurality of second ducts (433) is on the busbar (50) and at least one of the plurality of second ducts (433) is at a position between the plurality of battery cells (10).

8. The secondary battery module as claimed in one of claims 5 to 7, wherein at least one of the first connectors (411) and/or at least one of the second connectors (431) has a rectangular shape and covers the respective vent part (13).

9. The secondary battery module as claimed in one of claims 5 to 8, wherein at least one of the first ducts (413) comprises:
a first connection duct (413a) connected to a respective first connector (411) of the plurality of first connectors (411); and
a first discharge duct (413b) connected to the first connection duct (413a) to discharge gas in the first edge direction of the busbar holder (30)
and/or wherein at least one of the second ducts (433) comprises:
a second connection duct (433a) connected to a respective second connector (431) of the second connectors (431); and
a second discharge duct (433b) connected to the second connection duct (433a) to discharge gas in the second edge direction opposite to the first edge direction of the busbar holder (30).

10. The secondary battery module as claimed in claim 9, wherein, for the at least one of the first ducts (413), the first connection duct (413a) is connected between the respective first connector (411) and the first discharge duct (413b) and inclined at a first angle relative to the first discharge duct (413b), and/or wherein, for the at least one of the second ducts (433), the second connection duct (433a) is connected between the second connector (431) and the second discharge duct (433b) and inclined at the first angle relative to the second discharge duct (433b).

11. The secondary battery module as claimed in claim 10, wherein the first angle is within a range of about (45) 45° to about (150) 150° relative to the first discharge duct (413b).

12. The secondary battery module as claimed in one of claims 9 to 11, wherein, for the at least one of the first ducts (413), the first discharge duct (413b) is in the busbar holder (30) at a position between adjacent battery cells (10) of the plurality of battery cells (10).

13. The secondary battery module as claimed in one of claims 9 to 12, wherein, for the at least one of the first ducts (413), the first discharge duct (413b) has a trapezoidal flow path therein to allow the discharge of the gas.

14. The secondary battery module as claimed in one of claims 1 to 13, wherein the busbar holder (30) is made from a plastic composite material.

15. The secondary battery module as claimed in one of claims 1 to 14, wherein the terminal parts (11) of the plurality of battery cells (10) and the busbar (50) are joined via welds.
